# DEMANDE DE BREVET EUROPEEN

(11) **EP 2 085 685 A1**
(43) Date de publication de la demande: **05.08.2009**
(21) Numéro de dépôt: 09151761.5
(22) Date de dépôt: 30.01.2009
(51) Int. Cl.: F21S 8/10, F21W 101/10

(54) **Projecteur d'eclairage, notamment a module elliptique, pour vehicule automobile, a recuperation d'energie**

(30) Priorité: 31.01.2008 FR 0850618
(71) Demandeur: Peugeot Citroën Automobiles SA, 78140 Vélizy-Villacoublay (FR)
(72) Inventeur: Larribeau, Nathalie, 92800 Puteaux (FR); Delamarre, Laurent, 92800, Puteaux (FR)

(57) **Abrégé**

Projecteur d'éclairage pour véhicule automobile, comprenant une source lumineuse (9), une partie du faisceau lumineux issu de la source lumineuse (9) éclairant la route devant le véhicule,
**caractérisé en ce que** le projecteur comporte un ensemble de cellules (18) adaptées à recevoir une partie du rayonnement lumineux issu de la source (9) et n'éclairant pas la route devant le véhicule, ces cellules étant aptes à convertir ce rayonnement en une tension électrique propre à être délivrée et exploitée de manière indépendante.

## Description

La présente invention est relative à un projecteur d'éclairage pour véhicule automobile, comportant un module d'éclairement principalement constitué d'une source lumineuse et d'un réflecteur, notamment quoique non exclusivement à profil elliptique, qui dans ce cas comprend, sur son axe optique, un foyer intérieur où est disposée la source lumineuse et un foyer extérieur, avec un cache ou occulteur en forme de plaque s'étendant perpendiculairement à la direction de l'axe et dont la surface utile est sensiblement égale à la moitié de la projection du réflecteur dans le plan de l'occulteur, celui-ci présentant à une extrémité un bord de coupure propre à être déplacé vers ou écarté d'une position à proximité immédiate de ce foyer extérieur de manière à obtenir, selon le cas, au-delà d'une lentille convergente située en avant de l'occulteur et dont le plan focal est voisin de ce foyer extérieur, un faisceau lumineux réalisant la fonction de feu de croisement du projecteur lorsque l'occulteur est amené près du foyer, ou de feu de route lorsqu'il en est écarté.

L'invention peut également s'appliquer avec un occulteur en position fixe devant le réflecteur, avec son bord de coupure au foyer extérieur de ce dernier, notamment lorsque le projecteur d'éclairage est conçu pour ne réaliser que la fonction de feu de code, la fonction feu de route étant assurée par un projecteur distinct.

Dans une structure de projecteur d'éclairage de ce genre, l'occulteur, mobile ou non, joue un rôle comparable à celui d'une diapositive, en étant apte à projeter sur la route l'image du faisceau lumineux correspondant au feu de croisement, ceci en coupant une partie du rayonnement issu de la source lumineuse et renvoyé au-delà par le réflecteur elliptique, le déport de l'occulteur vis-à-vis du foyer extérieur éliminant toute image de sorte que le faisceau principal éclaire alors toute la zone en avant du véhicule en réalisant ainsi la fonction de feu de route.

Dans les deux cas, lorsqu'un module elliptique de ce genre est mis en oeuvre dans un projecteur d'éclairage, la lentille convergente est en principe seule illuminée, totalement ou partiellement.

De tels modules elliptiques, où l'occulteur assure ainsi une coupure du flux lumineux afin de ne pas éblouir le conducteur d'un engin roulant en sens inverse, sont déjà décrits dans l'état la technique, notamment dans les brevets européens EP 0 230 834 et 1 684 004.

On constate cependant que, avec ces réalisations connues, une part limitée mais néanmoins non négligeable de la lumière émise par la source lumineuse, ne traverse pas la lentille pour éclairer la route en avant du véhicule, mais se réfléchit sur d'autres structures du projecteur, le cas échéant sur des zones du réflecteur qui renvoient la lumière en dehors de cette lentille, ou encore en avant de celle-ci mais avec une inclinaison des rayons lumineux telle qu'ils ne se projettent pas sur la portion de route illuminée, mais rencontrent certaines parties du boîtier dans lequel est monté le réflecteur ou, en avant de ce boîtier, sur son prolongement de raccordement avec la carrosserie du véhicule, dans une région généralement appelée masque qui entoure en partie au moins le projecteur et se prolonge au-delà.

Cette fraction du flux lumineux est perdue pour la fonction d'éclairage du projecteur et est absorbée sans bénéfice par les diverses structures ou parois ainsi rencontrées.

La présente invention est relative à un perfectionnement apporté à un projecteur d'éclairage, qui permet de récupérer l'énergie perdue par cette fraction du flux lumineux non utilisée pour l'éclairement de la route et de l'exploiter à d'autres fins, en réalisant ainsi une économie appréciable.

A cet effet, le projecteur d'éclairage considéré, comprend une source lumineuse, une partie du faisceau lumineux issu de la source lumineuse éclairant la route devant le véhicule, le projecteur comportant un ensemble de cellules adaptées à recevoir une partie du rayonnement lumineux issu de la source et n'éclairant pas la route devant le véhicule, ces cellules étant aptes à convertir ce rayonnement en une tension électrique propre à être délivrée et exploitée de manière indépendante.

Avantageusement, au moins une partie de l'ensemble de cellules est montée à l'intérieur du projecteur contre un réflecteur au foyer duquel ou à l'un des foyers duquel est située la source.

Selon une autre caractéristique de l'invention au moins une partie de l'ensemble de cellules est montée à l'intérieur du projecteur contre un occulteur placé à proximité immédiate du foyer ou d'un foyer de la source de manière occulter une partie du faisceau lumineux issu de la source.

Selon une autre caractéristique au moins une partie de l'ensemble de cellules est montée sur au moins une partie d'un masque laquelle est disposée de manière à recevoir une partie du rayonnement lumineux qui est issu de la source et qui a traversé une lentille convergente.

Selon une autre caractéristique avantageuse, le projecteur d'éclairage comporte un module elliptique comprenant une source lumineuse et un réflecteur à profil en ellipse qui comprend, sur l'axe optique de ce réflecteur, un foyer intérieur (F1) où est disposée la source lumineuse et un foyer extérieur, avec un cache ou occulteur, mobile ou non, présentant à une extrémité un bord de coupure propre à être placé à proximité immédiate de ce foyer extérieur de manière à obtenir, au-delà d'une lentille convergente située en avant de l'occulteur et dont le plan focal est voisin de ce foyer extérieur, un faisceau lumineux pour l'éclairage de la route devant le véhicule.

Avantageusement, à cet effet le projecteur d'éclairage, notamment à module elliptique, constitué d'une source lumineuse et d'un réflecteur à profil en ellipse comprend, sur l'axe optique de ce réflecteur, un foyer intérieur où est disposée la source lumineuse et un foyer extérieur, avec un cache ou occulteur, mobile ou non, présentant à une extrémité un bord de coupure propre à être placé à proximité immédiate de ce foyer extérieur de manière à obtenir, au-delà d'une lentille convergente située en avant de l'occulteur et dont le plan focal est voisin de ce foyer extérieur, un faisceau lumineux pour l'éclairage de la route devant le véhicule, le module étant monté dans un boîtier de support prolongé par un masque à fonction esthétique exclusivement, disposé au-delà de la lentille, se caractérise en ce que le module comporte un ensemble de cellules montées à l'intérieur du boîtier contre le réflecteur et l'occulteur et/ou sur le masque, ces cellules étant adaptées à recevoir le rayonnement lumineux issu de la source ne traversant pas la lentille pour l'éclairement de la route devant le véhicule et celui frappant le masque au-delà de cette lentille, ces cellules étant aptes à convertir ce rayonnement en une tension électrique propre à être délivrée et exploitée de manière indépendante.

Selon une autre caractéristique de l'invention, les cellules sont des cellules photovoltaïques.

Avantageusement, les cellules sont groupées en panneaux séparés, répartis dans le module en diverses positions sur celui-ci, notamment sur le réflecteur, l'occulteur et le masque, selon le rayonnement lumineux à recevoir.

Selon le cas, les cellules dans les panneaux sont montées en série ou en parallèle et reliées à deux bornes, positive et négative, entre lesquelles est disponible la tension électrique délivrée.

Avantageusement, l'ensemble des cellules est réuni à un convertisseur alimentant les deux cosses d'alimentation de la batterie du véhicule ou un appareil d'utilisation extérieur.

De préférence également, les panneaux de cellules sont fixés au module par des pattes de liaison, métalliques ou en matière plastique, ou sont collées contre la surface du masque.

D'autres caractéristiques d'un projecteur d'éclairage à module elliptique conforme à l'invention, apparaîtront encore à travers la description qui suit d'un exemple de réalisation, donné à titre indicatif et non limitatif, en référence au dessin annexé, sur lequel:
- La Figure 1 est une vue schématique en perspective avec arrachement partiel, d'un projecteur à module elliptique d'un type connu dans la technique.
- La Figure 2 est une vue en coupe longitudinale du projecteur de la Figure 1, montrant le trajet des rayons issus de la source lumineuse.
- La Figure 3 est une vue analogue à la Figure 2, mais sur laquelle apparaissent les cellules permettant de récupérer l'énergie non utilisée pour l'éclairement de la route devant le véhicule.

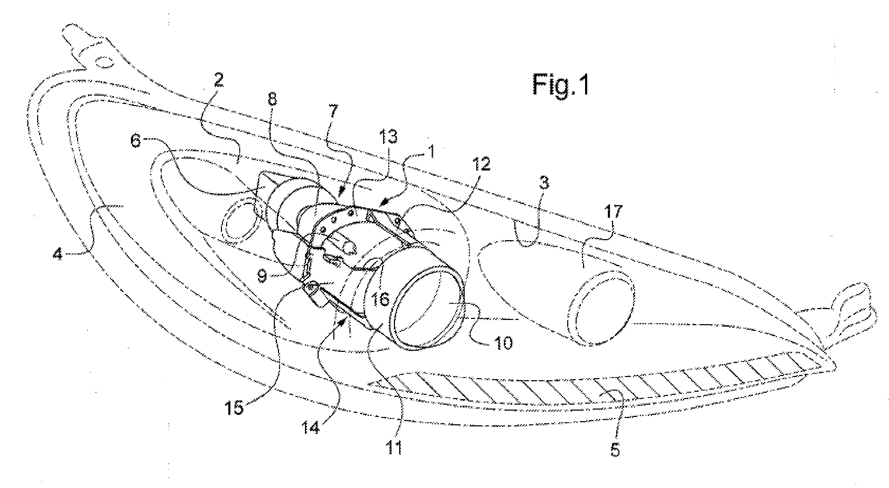

Sur la Figure 1, la référence 1 désigne un projecteur d'éclairage pour véhicule automobile, d'un genre classique dans la technique, comportant de manière générale un boîtier 2, monté et immobilisé en position dans l'ouverture 3 convenablement aménagée d'un logement 4, prévu dans le capot qui recouvre le compartiment moteur ou dans la partie avant de la carrosserie de ce véhicule.

Usuellement, afin de satisfaire des impératifs d'esthétique du projecteur 1 et de la carrosserie au droit de celui-ci, dans la zone où le flux lumineux est délivré par ce projecteur, le logement 4 est profilé en avant de ce dernier pour former une zone 5 de raccordement avec la carrosserie, appelée « masque » et qui s'étend de façon progressive et évolutive dans et à partir du logement 4.

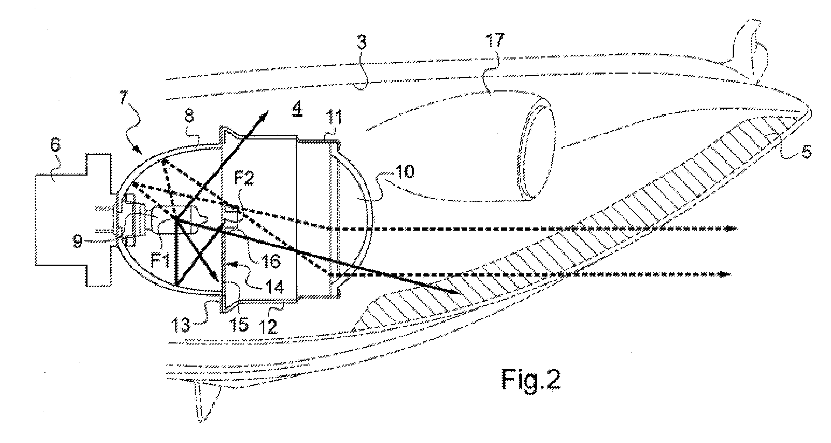

Le projecteur 1 comporte, au-delà d'un ensemble 6 de connexion électrique dont le détail de la réalisation est sans incidence sur l'invention qui sera décrite plus loin, ce qu'il est convenu d'appeler un module qui est dans l'exemple décrit un module elliptique 7 mais qui pourrait être de type différent, ce module étant essentiellement constitué d'un réflecteur 8 dont la section illustrée sur la Figure 2 est celui d'une ellipse, laquelle comporte de ce fait un foyer intérieur F1 et un foyer extérieur F2, situés dans le prolongement l'un de l'autre sur l'axe optique de cette ellipse (cet axe n'étant pas figuré pour ne pas surcharger le dessin)

Au foyer F1 de l'ellipse, est disposée une source lumineuse 9, constituée d'une lampe d'éclairage d'un type adapté à cet usage et dont les rayons lumineux issus de son filament sont réfléchis par le réflecteur 8 en direction du foyer extérieur F2. Au-delà de ce dernier, avec son propre axe optique confondu avec celui du réflecteur, est disposée une lentille convergente 10, sertie ou autrement montée dans une bague de support 11, reliée par des bras d'entretoisement 12 à un flasque 13 fixé à la partie frontale du réflecteur.

Par construction et notamment par le moyen de ces bras d'entretoisement, la position du foyer de la lentille 10 sur l'axe optique du module elliptique 7 est exactement fixée et sensiblement confondue avec le foyer extérieur F2 du réflecteur 8, de telle sorte que les rayons lumineux provenant de la source 9, renvoyés par ce réflecteur, soient convenablement redressés et transmis vers l'extérieur du projecteur d'éclairage 1 pour illuminer la route en avant du véhicule automobile avec un faisceau de lumière parallèle appropriée.

De façon également connue dans la technique, notamment par les divers documents antérieurs précités, le réflecteur elliptique 8 peut être associé, comme dans l'exemple représenté, à un occulteur 14, constitué d'un volet demi circulaire 15, comportant un bord de coupure diamétral 16 qui s'étend transversalement devant le réflecteur, également au voisinage immédiat de la position de son foyer extérieur F2 sur l'axe optique.

Dans l'exemple représenté, l'occulteur 14 est en position fixe par rapport au foyer extérieur F2 et est aménagé de telle sorte que le flux lumineux provenant de la source 9 qui frappe le volet 15 soit ainsi coupé et qu'une fraction seulement de ce flux puisse atteindre la lentille 10, le projecteur 1 jouant dans ce cas le rôle de feu de croisement, la fonction de feu de route étant exercée par un autre projecteur 17, schématiquement figuré sur les dessins, monté à côté du projecteur 1 dans l'ouverture 3 du logement 4.

En variante, le volet 15 de l'occulteur 14 peut être mobile et agencé pour lui permettre de se déplacer dans son plan afin de permettre à son bord de coupure 16 de s'écarter de façon commandée du foyer F2 et permettre d'accroître, voire de doubler le flux lumineux renvoyé vers la lentille 10 et au-delà de celle-ci vers la route devant le véhicule. Dans une autre forme de réalisation, l'occulteur peut aussi être conçu de manière à effectuer une rotation par rapport à la direction de l'axe optique, permettant de faire basculer son bord de coupure 16 latéralement.

Dans ces solutions, à occulteur mobile, lorsque le bord de coupure 16 de son volet 15 est amené au foyer extérieur F2, le projecteur assure, comme dans le cas précédent, la fonction de feu de croisement. En revanche, lorsque l'occulteur est déplacé pour s'écarter du foyer, il n'intervient plus sur le faisceau lumineux reçu par la lentille 10, de sorte que l'intégralité du rayonnement est alors transmise en direction de l'avant du véhicule au-delà du projecteur, qui est dans ce cas utilisé en situation de feu de route.

La vue en coupe de la Figure 2, montre plus explicitement le profil en ellipse du réflecteur 8, la liaison avec l'ensemble de connexion électrique 6 de la source d'éclairage 9 positionnée au foyer intérieur F1 de cette ellipse, et le volet 15 de l'occulteur 14 dont le bord de coupure 16 est disposé au voisinage du foyer extérieur F2, derrière la lentille 10.

Sur le dessin, on a représenté en traits interrompus, deux rayons lumineux, issus de la source 9 au foyer F1 et donc renvoyés par le réflecteur 8 vers le foyer extérieur F2, ces rayons étant tels qu'ils franchissent l'occulteur 14 en passant au dessus du bord de coupure 16 du volet 15, avant d'être repris par la lentille 10 pour sortir ensuite de celle-ci convenablement redressés en formant un faisceau de lumière parallèle, apte à éclairer la route en avant du projecteur.

Simultanément, on a représenté sur ce même schéma d'autres rayons lumineux, cette fois figurés en traits pleins pour les différencier des rayons précédents, qui issus également de la source 9, vont, non pas franchir l'occulteur 14 dans les mêmes conditions que les premiers en éclairant la route au-delà du projecteur, mais, soit aller rencontrer le masque 5 en partie avant du logement 4, n'étant pas convenablement et suffisamment redressés par la lentille 10 car trop inclinés sur l'axe optique de celle-ci, soit venir frapper d'autres parties du module elliptique 7, comme certaines zones du réflecteur 8 renvoyant ces rayons en dehors de la lentille 10, le volet 15 de l'occulteur 14 sous son bord de coupure 16 ou encore les bras de support 12 ou le flasque 13.

Dans tous les cas, ces rayons sont perdus pour l'éclairement de la route, l'énergie ayant servi à les produire étant entièrement dissipée sans être utilisée.

Le projecteur d'éclairage peut alors être perfectionné conformément à l'invention, notamment de façon à permettre de manière simple une large récupération de cette énergie et son exploitation à d'autres fins dans le véhicule.

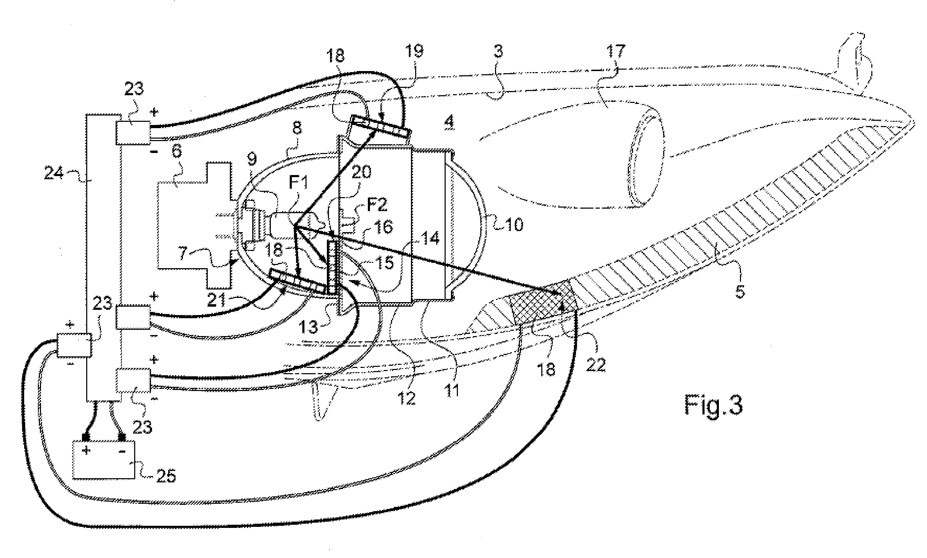

Dans ce but et comme illustré sur la coupe de la Figure 3, on équipe le module elliptique 7 d'une pluralité de cellules 18, propres à recevoir les rayons lumineux issus de la source 9 et non utilisés pour l'éclairement de la route et à transformer et convertir le rayonnement correspondant en une tension électrique pouvant être directement ou indirectement utilisée.

Les cellules 18 sont de préférence réparties aux endroits qui reçoivent les rayons non exploités, en étant groupées en panneaux tels que 19, 20 et 21 respectivement disposés au droit des bras d'entretoisement 12, contre la face du volet 15 de l'occulteur 14 en regard de la source 9, ou encore contre les parties du réflecteur 8 qui ne renvoient pas de façon suffisante le rayonnement reçu vers la lentille 10.

Un ou plusieurs panneaux complémentaires tel que 22, dont les cellules reçoivent les rayons qui franchissent le bord de coupure 16 de l'occulteur 14 au dessus de son volet 15 et frappent le masque 5 au-delà de la lentille 10, sont également fixés sur ce masque aux endroits appropriés.

Les panneaux de cellules sont fixés sur le module elliptique ou le masque par des pattes de liaison, métalliques ou plastiques, ou encore peuvent être collés sur les structures correspondantes de ce module.

Les cellules 18 de ces panneaux 19 à 22 sont des cellules photovoltaïques, classiques, comportant deux couches minces d'un matériau semi-conducteur, notamment de silicium, amorphe ou cristallin, ces couches étant dopées respectivement N et P pour engendrer entre elles, lorsqu'elles sont illuminées par un éclairement provenant du module 7, un courant électrique continu, apte à être collecté par deux électrodes, positive et négative, reliées à plat aux deux couches de la cellule, l'électrode positive réunie à la couche N qui reçoit l'éclairement étant constituée par une grille pour ne pas entraver le passage de la lumière. Ces cellules, dans chaque panneau, sont montées en série ou en parallèle

Par ailleurs et comme schématiquement illustré, les électrodes de sortie des divers panneaux de cellules sont reliés aux bornes positive et négative de connecteurs 23, eux-mêmes raccordés à un convertisseur 24, propre à fournir aux bornes de la batterie 25 du véhicule ou à un autre appareil d'utilisation approprié, la tension continue ainsi récupérée ou une tension transformée convenablement adaptée à la réalisation de cette fonction de charge, le cas échéant en stabilisant et lissant le courant produit par les cellules. Dans le cas d'une batterie, une diode (non représentée) est avantageusement montée dans le circuit du convertisseur, pour éviter la décharge de cette batterie en sens inverse dans les panneaux, lorsque le projecteur n'est pas utilisé.

Le convertisseur 24 peut également servir, de façon connue en soi, à la protection des cellules 18.

On réalise ainsi un projecteur d'éclairage permettant une récupération efficace de l'énergie produite pour faire fonctionner la source lumineuse qui n'est pas utilisée pour l'éclairement de la route en avant du véhicule, limitant d'autant la puissance globale à fournir par la batterie, en réduisant d'autant la demande imposée à l'alternateur qui charge cette batterie et par suite en permettant une relative économie de carburant.

En outre, le fait que les rayons lumineux non utilisés soient directement convertis dans les panneaux de cellules qui les reçoivent, évite que ces rayons ne soient renvoyés en créant des réflexions parasites qui peuvent accroître le risque d'éblouissement d'un conducteur circulant en sens inverse du véhicule.

Bien entendu, il va de soi que l'invention ne se limite pas à l'exemple de réalisation plus spécialement décrit et représenté ; elle en embrasse au contraire toutes les variantes.

## Revendications

1. Projecteur d'éclairage pour véhicule automobile, comprenant une source lumineuse (9), une partie du faisceau lumineux issu de la source lumineuse (9) éclairant la route devant le véhicule,
**caractérisé en ce que** le projecteur comporte un ensemble de cellules (18) adaptées à recevoir une partie du rayonnement lumineux issu de la source (9) et n'éclairant pas la route devant le véhicule, ces cellules étant aptes à convertir ce rayonnement en une tension électrique propre à être délivrée et exploitée de manière indépendante.

2. Projecteur d'éclairage selon la revendication 1, **caractérisé en ce que** au moins une partie de l'ensemble de cellules (18) est montée à l'intérieur du projecteur contre un réflecteur (8) au foyer duquel ou à l'un des foyers duquel est située la source (9).

3. Projecteur d'éclairage selon la revendication 1 ou 2, **caractérisé en ce que** au moins une partie de l'ensemble de cellules (18) sont montées à l'intérieur du projecteur contre un occulteur (14) placé à proximité immédiate du foyer ou d'un foyer de la source (9) de manière occulter une partie du faisceau lumineux issu de la source (9).

4. Projecteur d'éclairage selon la revendication 1 ou 2 ou 3, **caractérisé en ce que** au moins une partie de l'ensemble de cellules (18) sont montées sur au moins une partie d'un masque (5) laquelle est disposée de manière à recevoir une partie du rayonnement lumineux qui est issu de la source (9) et qui a traversé une lentille convergente (10).

5. Projecteur d'éclairage selon la revendication 1 ou 2 ou 3 ou 5, **caractérisé en ce qu'**il comporte un module elliptique (7) comprenant une source lumineuse (9) et un réflecteur (8) à profil en ellipse qui comprend, sur l'axe optique de ce réflecteur, un foyer intérieur (F1) où est disposée la source lumineuse et un foyer extérieur (F2), avec un cache ou occulteur (14), mobile ou non, présentant à une extrémité un bord de coupure (16) propre à être placé à proximité immédiate de ce foyer extérieur de manière à obtenir, au-delà d'une lentille convergente (10) située en avant de l'occulteur et dont le plan focal est voisin de ce foyer extérieur, un faisceau lumineux pour l'éclairage de la route devant le véhicule.

6. Projecteur d'éclairage pour véhicule automobile, notamment à module elliptique (7) constitué d'une source lumineuse (9) et d'un réflecteur (8) à profil en ellipse qui comprend, sur l'axe optique de ce réflecteur, un foyer intérieur (F1) où est disposée la source lumineuse et un foyer extérieur (F2), avec un cache ou occulteur (14), mobile ou non, présentant à une extrémité un bord de coupure (16) propre à être placé à proximité immédiate de ce foyer extérieur de manière à obtenir, au-delà d'une lentille convergente (10) située en avant de l'occulteur et dont le plan focal est voisin de ce foyer extérieur, un faisceau lumineux pour l'éclairage de la route devant le véhicule, le module (7) étant monté dans un boîtier de support (2) prolongé par un masque à fonction esthétique exclusivement, disposé au-delà de la lentille, **caractérisé en ce que** le module (7) comporte un ensemble de cellules (18) montées à l'intérieur du boîtier contre le réflecteur (8) et l'occulteur (14) et/ou sur le masque (5), ces cellules étant adaptées à recevoir le rayonnement lumineux issu de la source (9) ne traversant pas la lentille (10) pour l'éclairement de la route devant le véhicule et celui frappant le masque au-delà de cette lentille, ces cellules étant aptes à convertir ce rayonnement en une tension électrique propre à être délivrée et exploitée de manière indépendante.

7. Projecteur selon l'une quelconque des revendications précédentes, **caractérisé en ce que** les cellules (18) sont des cellules photovoltaïques.

8. Projecteur selon l'une des revendications 5 ou 6 ou 7, **caractérisé en ce que** les cellules sont groupées en panneaux séparés (19, 20, 21, 22), répartis dans le module en diverses positions sur celui-ci, selon le rayonnement lumineux à recevoir.

9. Projecteur selon l'une quelconque des revendications 1 à 8, **caractérisé en ce que** les cellules (18) dans les panneaux sont montées en série ou en parallèle et reliées à deux bornes, positive et négative, entre lesquelles est disponible la tension électrique délivrée.

10. Projecteur selon l'une quelconque des revendications 1 à 6, **caractérisé en ce que** l'ensemble des cellules (18) est réuni à un convertisseur (24) alimentant les deux cosses d'alimentation de la batterie (25) du véhicule ou d'un appareil d'utilisation extérieur.

11. Projecteur selon l'une quelconque des revendications 8 à 10, **caractérisé en ce que** les panneaux (19, 20, 21, 22) de cellules (18) sont fixées au module par des pattes de liaison, métalliques ou en matière plastique, ou sont collées contre la surface du masque.
